# EUROPEAN PATENT APPLICATION

(11) **EP 4 835 563 A1**
(43) Date of publication of application: **04.11.2026**
(21) Application number: 25174120.3
(22) Date of filing: 02.05.2025
(51) Int. Cl.: G03B 21/14, G03B 21/54, F16M 11/18, G03B 21/16, H04N 9/31

(54) **PROJECTION DEVICE CABINET AND METHOD**

(71) Applicant: Artome Oy, 19110 Vierumäki (FI)
(72) Inventor: Hautala, Joel, 19110 Vierumäki (FI); Mattila, Marko, 19110 Vierumäki (FI); Parikka, Toni, 19110 Vierumäki (FI); Syrjälä, Joonas, 19110 Vierumäki (FI); Kolli, Markus, 19110 Vierumäki (FI); Haveri, Janne, 19110 Vierumäki (FI)
(74) Representative: Papula Oy

(57) **Abstract**

A projection device cabinet (1), comprising a base (50), a first cabinet side wall (54) extending from the base (50), a second cabinet sidewall (55) extending from the base (50) and at a distance from the first cabinet side wall (54), a cabinet front wall (56), and cabinet back wall (57) defining together a cabinet space. The projection device cabinet (1) comprises a projection device support arrangement (30) comprising a support plate (31) configured to receive at least one projection device (200). A projection device space (8) is arranged in the cabinet space between the base (50) and a top wall (3,9) and between the first side wall (4,54) and the second side wall (5,55). The support plate (31) defining a floor or a wall of the projection device space (8) is arranged at one or more adjustable inclination angles (α₁, α₂, α₃) inside the cabinet space. Also, a method is disclosed.

## Description

### FIELD OF THE INVENTION

The present application relates generally to a projection device cabinet. More specifically, the present application relates to the projection device cabinet comprising a support plate for a projection device.

### BACKGROUND OF THE INVENTION

A projection device that displays images by projecting projection light onto a screen or a wall or other reflective surface are generally known and widely used. Even movable projection devices and other related equipment may need installation and set-up work before the projector and related equipment are ready for use. This may take time and often expert knowledge may be needed for a user. However, the ability of a projection device cabinet to project images to different places and heights may be further improved.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure provide a projection device comprising an adjustable support plate and a method for adjusting inclination of the support plate of a projection device cabinet. With the adjustable support plate an image may be projected to different places and heights.

According to a first aspect a projection device cabinet is disclosed comprising a base, a first cabinet side wall extending from the base, a second cabinet sidewall extending from the base and at a distance from the first cabinet side wall, a cabinet front wall, and cabinet back wall defining together a cabinet space, wherein the projection device cabinet comprises a projection device support arrangement comprising a support plate configured to receive at least one projection device; a projection device space is arranged in the cabinet space between the base and a top wall and between the first side wall and the second side wall; and the support plate defining a floor or a wall of the projection device space is arranged at one or more adjustable inclination angles inside the cabinet space. The projection device support arrangement may allow flexibility inside the cabinet because one or more projection devices may be used for multiple use cases. The image may be projected to different places and heights. Also, image height may be adjusted for different use cases. Sometimes the image may need to be projected above a presenter or down. When using one or more projection devices it may be possible to get for example a portrait aspect ratio or a 32:9 image aspect ratio with two projection devices. It may be easier to align the image of the projection device cabinet to the desired projection surface when the image projection angle is adjustable.

According to an example embodiment of the first aspect, the projection device support arrangement may be configured to be rotated around at least one turning point, which may be configured to provide at least single-degree-of-freedom (SDOF) movement for rotating the support plate around the at least one rotation axel of the support plate. The projection device support arrangement may adjust the at least one adjustable inclination angle of the support plate using the at least one turning point. The single-degree-of-freedom movement may refer to a system that may move only in one direction or along one axel. This may include movements such as translation along the axel or rotations about this axel. Thus it may have only one independent mode of motion. This may allow the image and the sound of a projection device cabinet system to be directed independently, such that they may not necessarily be aligned along the same rotation axis. Thus the image and the sound of a projection device cabinet system may be directed independently, such that they may be aligned along at least one of the same axes of rotation or they may be aligned along at least one of the different axes of rotation. It may also allow height adjustment of the image.

A two-degree-of-freedom (2DOF) may move in two independent directions or along two axes. This may include movements such as translation along the x and y axes or rotations about these axes. Thus it may have two independent modes of motion. It may allow height adjustment of the image and rotation to portrait position. The projection device support plate may be rotated from landscape to portrait with axis of two-degrees-of-freedom. Traditionally an image may be presented with a laptop image ratio, which may be 16:9 or 16:10. When using mobile phones the image ratio may be 9:16. When projecting the 9:16 image to a 16:9 screen, only part of projection imaging power may be in use. However, this setup may enable the use of the 9:16 image with full potential of the projection device.

A three-degree-of-freedom (3DOF) system may move in three independent directions or along three axes. This may include movements such as translation along the x, y, and z axes or rotations about these axes. It may allow height adjustment, rotation to portrait position, and horizontal rotation of the image.

According to an example embodiment, the at least single-degree-of-freedom (SDOF) means that the movement is at least one of the following: the single-degree-of-freedom (SDOF), the two-degree-of-freedom (2DOF), or the three-degree-of-freedom (3DOF). The image and the sound of a projection device cabinet system may be directed independently, such that they may be aligned along at least one of the same axes of rotation or they may be aligned along at least one of the different axes of rotation. Traditionally, sound may be projected in the opposite direction to the image. However, if you want the sound to be directed in a direction other than perpendicular to a projection surface this may be useful. For example, it may be possible to project the image onto a side wall instead of an end wall and direct the sound perpendicular to the audience.

According to an example embodiment of the first aspect, the one or more adjustable inclination angles may comprise at least one of the following: an adjustable first inclination angle, an adjustable second inclination angle, and/or an adjustable third inclination angle; at least one rotation axel may comprise at least one of the following: a first rotation axel located between the first cabinet side wall and the second cabinet sidewall, a second rotation axel located between the cabinet front wall and the cabinet back wall, and/or a third rotation axel located between the top wall and the base; and the support plate may be configured to be arranged at least one of the following: at the adjustable first inclination angle by rotating the support plate around the first rotation axel of the support plate; at the adjustable second inclination angle by rotating the support plate around the second rotation axel of the support plate; and/or at the adjustable third inclination angle by rotating the support plate around the third rotation axel of the support plate. The first rotation axel may be a first horizontal rotation axel located between the first cabinet side wall and the second cabinet sidewall. The second rotation axel may be a second horizontal rotation axel located between the cabinet front wall and the cabinet back wall. The third rotation axel may be a third vertical rotation axel located between the top wall and the base. The projection device support arrangement may adjust one or more adjustable inclination angles. This may allow the support plate to be rotated about one, two, or all of the x, y, and z axes.

According to an example embodiment of the first aspect, the at least one turning point may be located at a first edge, at a second edge, between the first edge and the second edge, in the middle of the support plate; or offset perpendicular from support plate, wherein a projecting structure of the at least one projection device is facing towards the first edge of the support plate. Wherein the first edge of the support plate is located towards the cabinet front wall of the projection device cabinet. When the rotatable axel is located at least one of the following; at side, below, above, proximity, and/or close to the projecting structure, such as a lens, the size of the movable projector cabinet may be minimized because size of an opening for the projecting structure may be optimized, and it may be as small as possible. Also, distance from the projecting structure to the opening may be kept minimal when the at least one turning point is as close to the opening or an edge of the opening as possible. In addition, also a space the at least one projection device may need and height of the projection device cabinet may be minimized. If the at least one turning point is located in the middle of the projection device cabinet it may be easier to move the support plate but it may require a higher and wider projection device cabinet. The rotatable at least one turning point may also be located on the opposite side of projection device than the projecting structure at the cabinet back wall side. When the at least one turning point is located offset perpendicularly from the support plate the projecting structure may move less up and down as if the at least one turning point would have been located on the support plate level or below it. By moving the at least one turning point of the support plate the space required by the solution, the size of the opening for the projecting structure, and the functionality of the support plate for different uses may be optimized.

According to an example embodiment of the first aspect, the projection device cabinet may further comprises an adjustment system for adjusting inclination of the support plate; at least one sensor for recognizing the at least one adjustable inclination angle of the support plate; at least one position indicator configured to indicate the at least one adjustable inclination angle for manual adjustment of settings of the projection device and/or projection device cabinet; at least one distance sensor configured to measure distance between the at least one distance sensor and a projected image; at least one camera; at least one light sensor; and/or at least one temperature sensor. The at least one sensor for recognizing the at least one adjustable inclination angle of the support plate may be at least one position sensor. The sensor may be used to recognize at least one adjustable inclination angle. There may be different kinds of sensors for measuring the angle. The angular position may be measured directly, for example using at least one of the following: a rotary encoder, a potentiometer, and/or a resolver. The inclination accelerometers may be measured, for example using at least one of the following: an inclinometer, a gyroscope, and/or tilt sensor. The linear distance may be measured, and it may be converted to an angle with trigonometric.

When the projection device adjustment may be done manually to the at least one projection device, the indicator may tell the user the correct values for adjustment. The adjustment system may have a scale or a display that may indicate the at least one adjustable inclination angle and/or other measured parameter. The indicator may also be digital. When the at least one distance sensor is integrated into the support plate, the distance to the projected image may be obtained, not only to a direct distance to a wall. This distance may be different because the projected image may be shot at an angle. This may allow the image settings of the projection device to be adjusted automatically. The at least one distance sensor comprises, for example, laser technology or ultrasound. At least one laser or ultrasound may be attached to the support plate. The at least one light sensor may be located on an outer surface of the projection device cabinet. The at least one light sensor may automatically adjust image settings.

According to an example embodiment of the first aspect, at least one of the following: the projection device support arrangement, the support plate, an adjustment system, and/or the projection device cabinet may comprise the at least one sensor for recognizing the at least one adjustable inclination angle of the support plate. The at least one sensor may be at least one position sensor. The at least one sensor may be located in different places, and they may measure angles of different devices, different parts, or different features of the projection device cabinet.

According to an example embodiment of the first aspect, the at least one adjustable inclination angle of the projection device support plate may be configured to be adjusted mechanically or automatically. This may allow various methods to be used for adjustment.

According to an example embodiment of the first aspect, settings of the at least one projection device and/or the projection device cabinet may be configured to be adjusted automatically by using data from the at least one of the following: a camera, a sensor, a distance sensor, a light sensor, and/or a temperature sensor. With sensor data, the projection device cabinet may automatically adjust settings of the projection device, projection device cabinet, and/or the projection device cabinet air ventilation system. In addition to the projection device, it may be possible to adjust at least one of the following: the at least one inclination angle of the support plate, ventilation, a shutter, and/or any other parts of the projection device cabinet. The at least one camera may measure the distance of the image and detect image distortions with the at least one projection device. The camera may be used to adjust the image to the optimal level. According to an example embodiment of the first aspect, the projection device support arrangement may further comprise a motor for automatic adjustment. The motor may allow automatic controlling or adjustment remotely.

According to an example embodiment of the first aspect, the adjustment by the motor may be configured to be made with motorized linear motion or by motorized rotation-based motion. For example eccentric or lever may be used. Different mechanical solutions may be suitable for different uses.

According to an example embodiment of the first aspect, mechanical adjustment, weight compensation, and/or locking may be configured to be made by at least one of the following: a spring, a locking or non-locking gas spring, a clamping screw, a handwheel, and/or a lever. The locking of the support plate may be done or may be released using different methods and the angle may be adjusted manually. The mechanical adjustment may be done, for example for the right angle. This may be done to reduce weight, which may make adjustment easier. It may also be done to locking, which may make the adjustment to stay in place.

According to an example embodiment of the first aspect, the projection device cabinet may further comprise an electronic module and at least one connection panel. The electronic module may be attached to the support plate or to the projection device cabinet. It may control at least one of the following functions: movement of the projection device support arrangement, a sound system, a projector, and/or an external device. It may collect, send, and/or receive information wirelessly and/or wired. The electronic module may include connections for external devices, such as sound, projectors, external devices. When the electronic module is attached to the support plate, the sensor that may measure the tilt of the support plate, may be integrated into the electronic module, eliminating the need for separate sensor electronics.

According to an example embodiment of the first aspect, the support plate may comprise at least one of the following: at least one screw hole for locking; at least one mounting hole for aligning at least one projection device into a place; at least one ventilation hole for projection device air ventilation; and/or at least one ventilation air flow device. The projection device may require fresh air. Heated air may not be allowed to circulate back to projection device air intake. Air flow may be optimized in different setups with the at least one ventilation air flow device. Ventilation on the support plate may be achieved either by perforating the support plate or by adding one or more ventilation devices, such as a fan. The support plate may have mounting holes for the projector device. The projection device may have protrusions on the bottom of the projection device. The protrusions on the bottom of the projection device may be located into the mounting holes when the projection device is placed in place. As a result, the mounting holes may be in the right place.

According to an example embodiment of the first aspect, the projection device cabinet may be a movable projection device cabinet. A movable projector cabinet having an AV system and at least one projection device may reduce the total cost of construction because the installation of AV technology in the operation site may be eliminated, and the design of AV may not require special expertise. With casters the projector cabinet may be moved easily.

According to an example embodiment of the first aspect, the cabinet may comprise one or more casters and/or furniture legs.

According to a second aspect, a method for adjusting inclination of a support plate of a projection device cabinet according to any one of the first aspects above is disclosed, wherein the projection device cabinet comprises a base, a first cabinet side wall extending from the base, a second cabinet sidewall extending from the base and at a distance from the first cabinet side wall, a cabinet front wall, and cabinet back wall defining together a cabinet space, wherein the projection device cabinet comprises a projection device support arrangement comprising a support plate configured to receive at least one projection device; and a projection device space is arranged in the cabinet space between the base and a top wall and between the first side wall and the second side wall; and the support plate defines a floor or a wall of the projection device space, wherein in the method inclination of a support plate is adjusted to one or more adjustable inclination angles inside the cabinet space.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig 1a shows schematically an example of a back view of a projection device cabinet according to an example embodiment;
Fig. 1b shows schematically an example of a front view of a projection device cabinet according to an example embodiment;
Fig. 2a shows schematically an example of a front view of a projection device support arrangement according to an example embodiment;
Fig. 2b shows schematically an example of a front view of how a support plate of Fig. 2a is rotated around a first rotation axel according to an example embodiment;
Fig. 2c shows schematically an example of a side view of the projection device support arrangement of Fig. 2a according to an example embodiment;
Fig. 2d shows schematically an example of a side view of the projection device support arrangement of Fig. 2b according to an example embodiment;
Fig. 3 shows schematically an example of a side view of how a plate is rotated around a first rotation axel according to an example embodiment;
Fig. 4a shows schematically an example of a partial side view of how a support plate is rotated around a first rotation axel according to an example embodiment;
Fig. 4b shows schematically an example of a partial side view of how a support plate is rotated around the first rotation axel and/or a second rotation axel according to an example embodiment;
Fig. 4c shows schematically an example of a partial side view of how a support plate is rotated around the first rotation axel, the second rotation axel, and/or a third rotation axel according to an example embodiment;
Fig. 5 shows schematically an example of a top view of how a support plate is rotated around a third rotation axel according to an example embodiment;
Fig. 6a shows schematically an example of how a turning point may be moved offset according to an example embodiment;
Fig. 6b shows schematically another example of how a turning point may be moved offset according to an example embodiment;
Fig. 7a shows schematically an example of a side view of an adjustment system according to an example embodiment;
Fig. 7b shows schematically another example of a side view of an adjustment system according to an example embodiment;
Fig. 7c shows schematically still an example of a side view of an adjustment system according to an example embodiment;
Fig. 7e shows schematically still another example of a side view of an adjustment system according to an example embodiment;

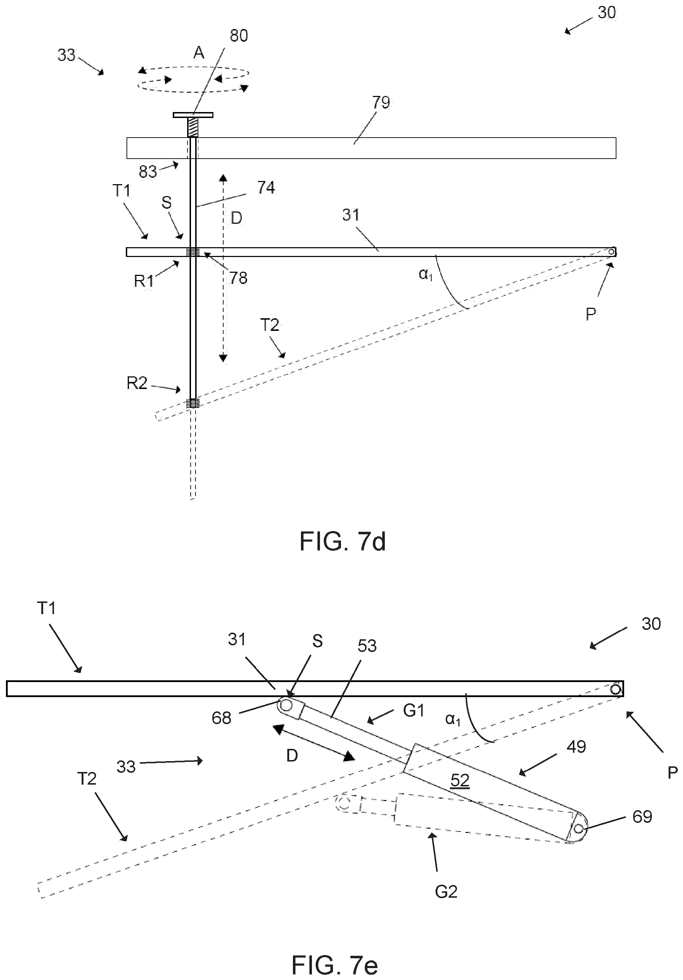

Fig. 7e shows schematically yet an example of a side view of an adjustment system according to an example embodiment;

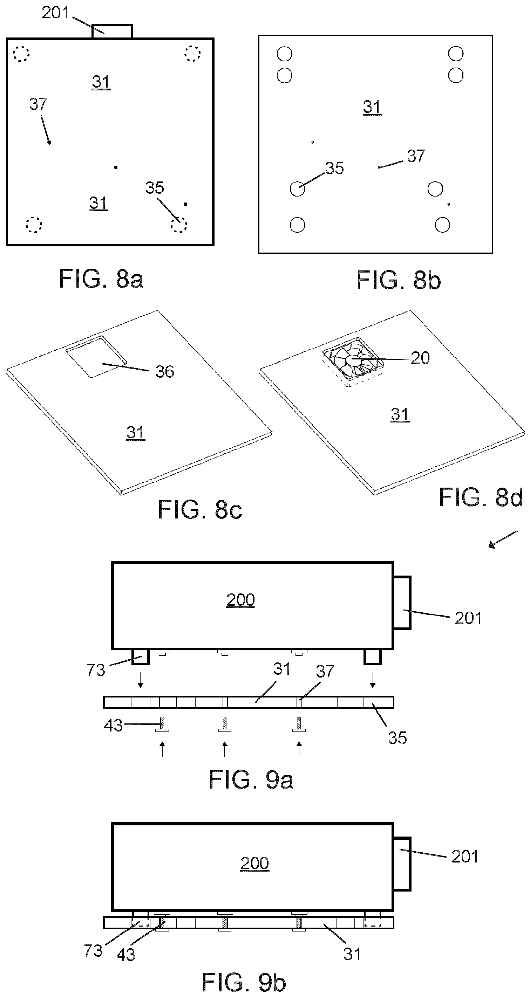

Fig. 8a shows schematically an example of a bottom view of a support plate comprising screw holes and mounting holes according to an example embodiment;
Fig. 8b shows schematically another example of a bottom view of a support plate comprising screw holes and mounting holes according to an example embodiment;
Fig. 8c shows schematically an example of a bottom view of a support plate comprising a ventilation hole according to an example embodiment;
Fig. 8d shows schematically an example of a bottom view of a support plate comprising a ventilation hole and a fan located in the ventilation hole according to an example embodiment;
Fig. 9a shows schematically an example of a side view of a projection device and a support plate according to an example embodiment;
Fig. 9b shows schematically an example of how the projection device of Fig. 9a is attached to the support plate according to an example embodiment;

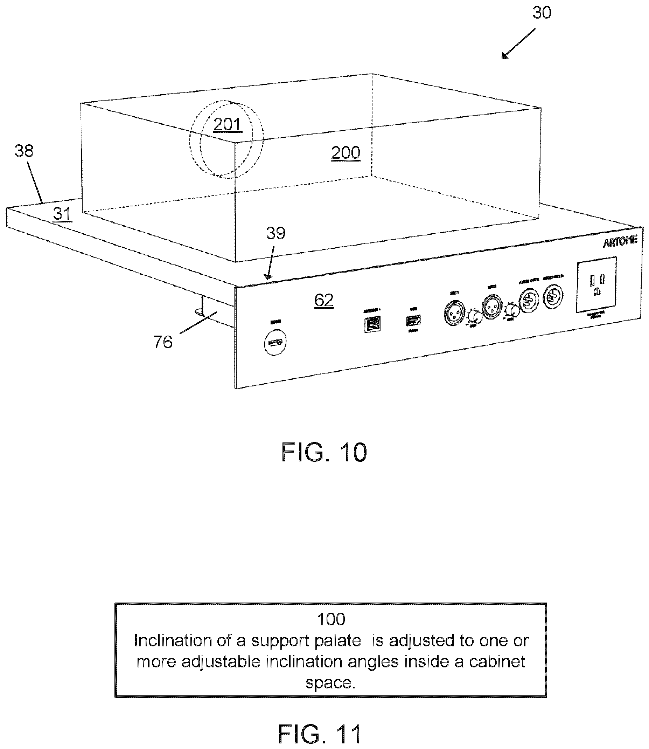

Fig. 10 shows schematically an example of a projection device support arrangement according to an example embodiment;
Fig. 11 shows an example method for adjusting inclination of a support plate of a projection device cabinet according to an embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

According to an example embodiment, a projection device cabinet is disclosed. The projection device is, for example a projector or a hologram device.

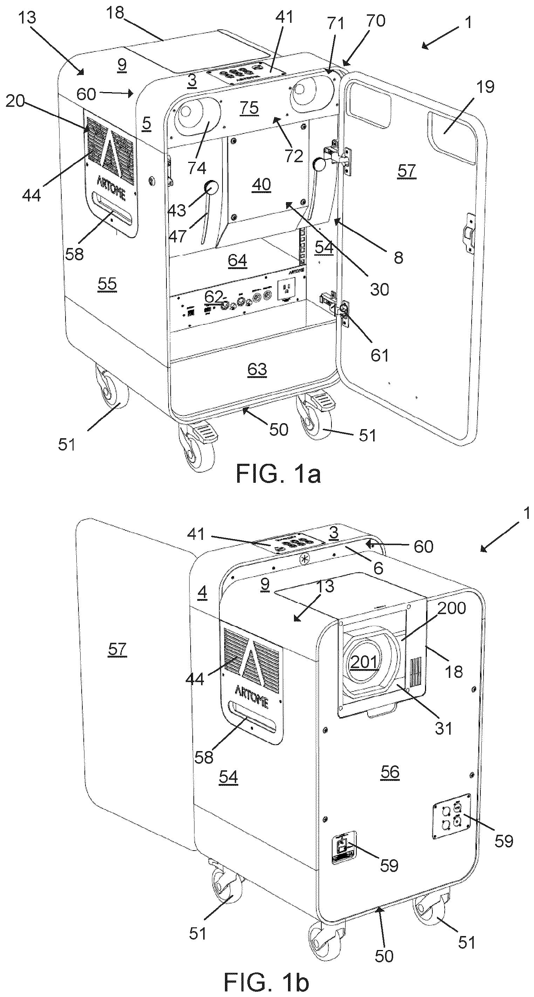

A diagrammatic illustration of an embodiment of a projection device cabinet 1 is depicted in Figures 1a and 1b. The projection device may not be part of the invention.

An example of Fig. 1a shows a back view of a projection device cabinet 1. An example of Fig. 1b shows a front view of a projection device cabinet 1 of Fig. 1a. The projection device cabinet 1 may comprise a base 50, a first cabinet side wall 54 extending from the base 50, and a second cabinet sidewall 55 extending from the base 50 and at a distance from the first cabinet side wall 54. A cabinet front wall 56 and cabinet back wall 57 may define together a cabinet space. The projection device cabinet 1 may also comprise one or more casters 51 and/or one or more furniture legs. The projection device cabinet 1 may be a movable projection device cabinet. The projection device cabinet may further comprise a projection device support arrangement 30 comprising a support plate 31 configured to receive at least one projection device 200. A projection device space 8 may be arranged in the cabinet space between the base 50 and a top wall 3, 9 and between the first side wall 4, 54 and the second side wall 5, 55. The support plate 31, which may define a floor or a wall of the projection device space 8 may be arranged at one or more adjustable inclination angles α₁, α₂, α₃ inside the cabinet space.

The projection device cabinet 1 may comprise a base 50. In an embodiment the base 50 may be a base board-like member. One or more casters 51 and/or one or more furniture legs may be arranged at the bottom surface of the base 50. In an embodiment the casters 51 may be provided at four corners on the bottom surface of the base 50. The casters 51 may make it possible to move the cabinet 1 together with the projection device 200. A brake may be provided on the casters 50 or any suitable moving means. Instead of using casters 51, the projection device cabinet may be arranged with the furniture legs.

In an example embodiment the cabinet may comprise a top wall 3, 9 at a distance from the base 50 and substantially parallel with the base 50. There may be a lower top wall 9 and an upper top wall 3. An upper part 60 may comprise the upper top wall 3, the upper first side wall 4, and the upper second side wall 5. In an embodiment the upper top wall 3 and/or the lower top wall 9 may be a table board or other board-like member.

In an example embodiment of the projection device cabinet 1 a projection device space 8 may be arranged in a cabinet space between the base 50 and the top wall 3, 9 and between the first side wall 4, 54 and the second side wall 5, 55. A support plate 31 or structure may be arranged between the first side wall 4, 54 and the second side wall 5, 55. It may be arranged at a distance from the cabinet front wall 56 and/or at a distance from the cabinet back wall 57. The projection device 200 may be arranged on the projection device support plate 31 or another support part.

In an example embodiment the projection device space 8 may be defined by an upper surface of the projection device support plate 31, a lower surface of the lower top wall 9, an inner surface of the first side wall 4, 54 and an inner surface of the second side wall 5, 55. In an example embodiment the projection device space 8 may be defined by an upper surface of the projection device support plate 31, a lower surface of the lower top wall 9, an inner surface of the first side wall 4, 54, an inner surface of the second side wall 5, 55 and the base 50. In a plane parallel of the front wall 56 the support plate may extend from the first side wall 4, 54 to the second side wall 5, 55. In a plane parallel of the top wall 9 the support plate may extend from the first side wall 4, 54 to the second side wall 5, 55. The front wall 56 may be extending between a front edge of the base 50 and a front edge of the lower top wall 9. In an example embodiment the front wall 56 may be arranged to extend towards the lower top wall 9 in a perpendicular direction from the plane of the base 50. In a plane parallel to the base 50 the front wall 56 may extend from the first side wall 4, 54 to the second side wall 5, 55. In an example embodiment the front wall 56 may comprise at least one first connecting panel 59. The front wall 56 may comprise a door. The at least one first connecting panel 59 may comprise connections for external systems or for example a mains connection.

According to an example embodiment, in a plane parallel to the top wall 9 the support plate may extend from the first side wall 4, 54 to the second side wall 5, 55. The projection device support plate 31 may be arranged to extend from the front wall 56 towards the back wall 57 of the projection device cabinet 1. In an embodiment the height of the protection cover space may be arranged to increase at least on a portion of the distance of the projection device space extending from a front wall 56 towards the back wall 57. This means that there may be arranged more free space between the projection device and the upper wall (top wall) of the projection device space in the portion next to the back wall than in the portion of the projection device space next to the front wall. In an embodiment a height of the protection cover space may be arranged to decrease at least on a portion of the distance of the projection device space 8 extending from a front wall 56 towards the back wall 57.

According to an example embodiment, in a plane parallel to the front wall 56 the support plate extends from the first side wall 4, 54 to the second side wall 5, 55. The projection device support plate 31 may be arranged to extend from the top wall 9 towards the base 50 of the projection device cabinet 1.

Openings 44 may be arranged from outside of the cabin to the projection device space 8 of the cabinet. In an example embodiment the openings 44 may be arranged on the first side wall 54 and/or on the second side wall 5, 55. In an embodiment an air filter may be arranged in connection with the openings 44. In an embodiment a mesh may be arranged in connection with the openings 44.

A handle opening 58 may be arranged in each of the side walls 54, 55. The handle opening 58 may be arranged in a module with the openings 44. The module may also comprise at least one fan 20.

At least one first and/or second connection panel 59, 62 may be arranged in the projection device cabinet 1.

The projection device cabinet 1 may comprise at least one projection device 200 having a projecting structure 201, such as a lens and/or mirror system.

In an example embodiment at least one fan 20 may be arranged to draw air from the projection device space 8 and blow the air outside the cabinet 1. In an example embodiment an opening 44 may be arranged to the first side wall at a point of the fan 20 for conveying air from the projection device space 8 outside the projection device space 8. In an example embodiment the at least one fan 20 during its operation sucks air from the projection device space. In an example embodiment the at least one fan 20 blows air from outside to the projection device space 8. In an example embodiment the fan 20 may be configured to achieve an air flow through the at least one opening 44 to bring cooling air to the projection device 200. In an embodiment the air may flow through a cooling system of the projection device 200 and the air, which may be warming during a cooling phase of the projection device, may be discharged to the portion of projection device space 8 next to other side wall. There the warm air flow coming from the projection device 200 may be mixed with a flow of cool air coming from handle openings 58 of the first and second side walls 4, 5.

In an example embodiment the arrangement may comprise a plurality of fans 20. In an example embodiment of the Fig. 1a at least one fan 20 may be arranged on the side walls of the cabinet 1 in connection with the projection device space 8. In an embodiment a cover panel, a lattice, a grill, or a mesh may be arranged to the back wall and/or front wall. In an example embodiment the cover, lattice, grill, or mesh may be arranged to the arrangement by a quick-release coupling. In an example embodiment the quick-release coupling of the cover panel may be arranged by magnets and their counter parts.

In an example embodiment an operation panel 41 may be arranged to the projection device cabinet 1. In an embodiment the operation panel 41 may be arranged on the upper part 60 of the projection device cabinet 1. In an embodiment the upper part 60 extends at a distance perpendicular from the plan of the lower top wall 9. The upper part 60 has an upper part front wall 6 and the upper top wall 3. The first and second upper side wall 4, 5 may each have a top portion extending to the top wall 3 of the upper part. The back wall 57 of the projection device cabinet may extend to the top wall 3 of the upper part. The back wall 57 of the projection device cabinet may cover at least part of the back part of the cabinet 1.

The upper part 60 may comprise an upper top wall 3. A first upper side wall 4 may extend downwards from the upper top wall 3. A second upper side wall 5 may extend downwards from the upper top wall 3, and at a distance from the first upper side wall 4. The upper part 60 may further comprise a front wall 6 extending downwards from the top wall 3 between the first side wall 4 and the second side wall 5. The upper part 60 may further comprise a back wall extending downwards from the top wall 3 between the first side wall 4 and the second side wall 5, and a distance from the front wall. The upper part may also comprise an operation panel 41. The upper part 60 may also comprise a loudspeaker system 70 arranged on the back part of the upper part 60.

According to an example embodiment, the first and second side wall 4, 5 may be connected to a first cabinet side wall 54 and second cabinet side wall 55 of the projection device cabinet 1.

In an example embodiment, a curved transition zone 13 to the top wall 3 or the lower top wall 9 and/or to the first side wall 4 and/or to the second side wall 5 is arranged on a corner area between the upper top wall 3 or the lower top wall 9 and the first upper side wall 4 and/or a corner area between the upper top wall 3 or the lower top wall 9 and the second upper side wall 5.

In an example embodiment a loudspeaker system 70 may be arranged in the projection device cabinet 1. In an example embodiment the loudspeaker system 70 may be arranged on the back wall side of the projection device cabinet 1. In an example embodiment the speaker system 70 may be arranged on the upper part of the projection device cabinet 1.

In an example embodiment the at least one enclosure may be formed into the upper part 60.

In an example embodiment the first and the second partition wall may be arranged extending from a support plane to the top wall 3. In an example embodiment the first partition wall and the second partition wall may be arranged at a distance from each other to form an enclosure, so that the at least one speaker module may be arranged between them.

According to an example embodiment, a projection device cabinet 1 comprises a loudspeaker system 70. The at least one loudspeaker system 70 may comprise at least one speaker module 71, which may comprise at least one waveguide module 72 and at least one transducer. The waveguide module 72 may comprise at least one waveguide and a front part 75.

In an example embodiment the loudspeaker system 70 or the at least one speaker module may be arranged to the at least one enclosure.

In an example embodiment at least one loudspeaker system 70 is operationally arranged to direct its sound on the back side of the upper part 60.

In an example embodiment the operation panel 41 may be arranged on the upper part of the projection device cabinet. In an example embodiment the operation panel 41 may be arranged on the top wall 3 of the upper part 60 of the projection device cabinet 1. In an embodiment the operation panel 41 may be embedded to the upper top wall 3 of the projection device cabinet. In an embodiment a front surface of the operation panel 41 may be embedded at a distance inwards from a plane of the top wall 3 of the upper part 60 of the projection device cabinet 1. The operation panel 41 may comprise at least one of the following: on-off switch, volume up/down button(s), video signal in, USB, Ethernet, HDMI, Mic/Line in, several programmable user buttons, for example source, freeze, mute, pause. The operation panel 41 may have a power outlet. In an example embodiment the operation panel 41 may comprise a touch screen. In an embodiment the operation panel 41 may be a removable operation panel. In an embodiment the projection device cabinet 1 may comprise a computer. In an embodiment the computer may be arranged in the operation panel 41.

In an example embodiment an operation panel 41, optionally comprising at least one of the following: a camera 42, microphone 45, and/or sensor 46 arranged to an upper part of the upper part 60, for example to the upper top wall 3 or to the waveguide module 72. In an example embodiment the camera 42 may be removable. In an example embodiment the camera 42 may be adjustable. By arranging the at least one camera to the projection device cabinet 1, the projection device cabinet 1 may be used also in webinars, video calls and other suitable uses. Arranging the camera 42 in the operation panel 41 a suitable module for assembling may be achieved. In an example embodiment there may be arranged a plurality of cameras 42. In an example embodiment the camera 42 may be a content camera and/or a conference camera. In an example embodiment the content camera may be arranged for creating images of a content, such as another subject or another view of the presenter or whiteboard or flip chart. In an example embodiment the camera 42 may be a pan-tilt camera. In an example embodiment the camera 42 may be a pan-tilt-zoom camera. In an example embodiment the pan-tilt-zoom camera may be capable of remote directional and zoom control.

In an embodiment a second connecting panel 62 may be arranged in the projection device cabinet 1. In an embodiment the second connecting panel 62 may comprise mains in connection. In an embodiment the connecting panel 62 may further comprise other input/output connection points for power, sound, and data. In an example embodiment the support part 31 may comprise the second connecting panel 62. The second connecting panel 62 may be attached to the support plate 31. The second connecting panel 62 may be attached at a second edge 39 of the support plate 31. In an example embodiment the second connecting panel 62 may be arranged in the projection device cabinet 1 in a technical space 64. In an example embodiment the technical space 64 may be arranged between the base 50 and the projection device support plate 31 or structure in the projection device cabinet 1. In an example embodiment the connecting panel may be arranged on connection rails arranged in the technical space 64.

In an example embodiment, the back wall 57 or the front wall 56 may be arranged pivotable by hinges 61 to the first side wall 54 or to the second side wall 55. In an example embodiment the back or front wall 57, 56, is a door. In an example embodiment, at least one opening 19 may be arranged to the door or back wall 57 for the loudspeaker system 70. In an example embodiment, the door or back wall 57 do not cover the loudspeaker system 70. In an embodiment an opening may be arranged on the cabinet 1 for a power cable. In an embodiment the opening 19 may be arranged through a base 50.

In an example embodiment, the projection device space 8 of the projection device cabinet 1 may be configured to receive a laser projector, preferable a laser projector with short throw or ultra-short throw lens. In an example embodiment, an image and sound may be optimized for different sized spaces. In an example embodiment, an AV technology of the movable projection device cabinet and the projection device optimized for the gym may be converted for conference use without the need for reprogramming or installation.

In an embodiment the support plate may be movable attached to a protecting plate 40. The protecting plate 40 may be attached to a first or the second edge 38, 39 of the support plate 31.

In an embodiment the projection device cabinet 1 may transform a gymnasium for festive use and a lobby as an exhibition space. The projection device cabinet 1 may be used for several different purposes, resulting in a high utilization rate of AV technology.

At the design phase, the light output of a projection device may be determined according to the requirements of room brightness and the image size. In an example embodiment, the projection device cabinet 1 and its sound system may be expanded to meet the needs of events by selecting appropriate connections and features for the solution.

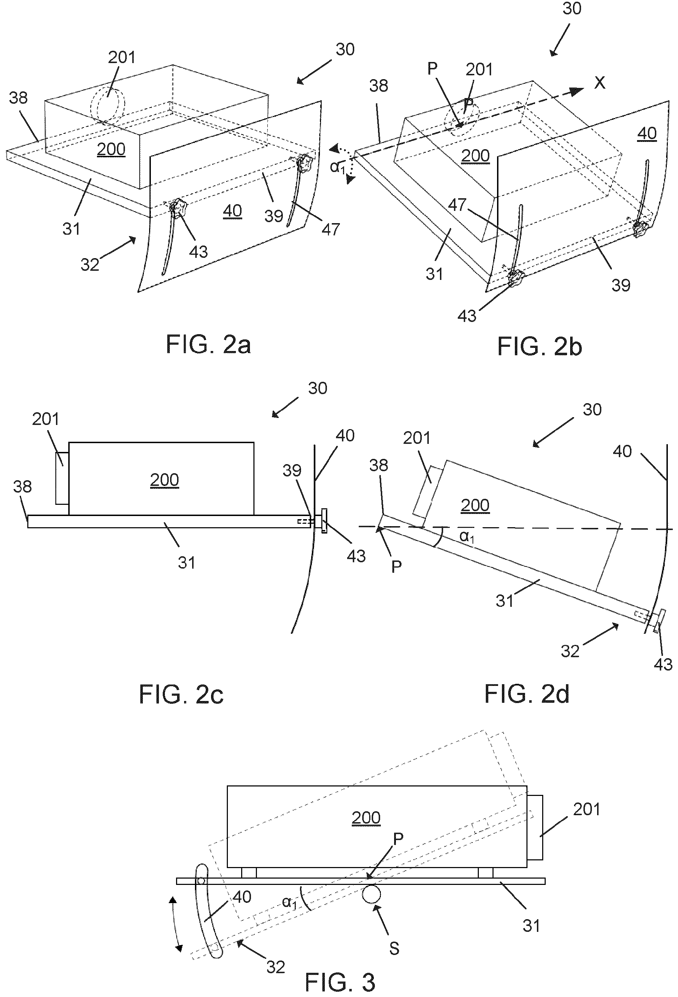

An example of Fig. 2a shows a front view of a projection device support arrangement 30. A projection device 200 is located on a support plate 31. A projecting structure 200 is pointing to a first edge of the support plate 38. An example of Fig. 2b shows a front view of how the projection device support arrangement 30 of Fig. 2a is rotated around a first rotation axel X to an adjustable first inclination angle α₁. The first rotation axel X may go through a turning point P. An example of Fig. 2c shows a side view of the projection device support arrangement 30 of Fig. 2a. An example of Fig. 2d shows an example of a side view of the projection device support arrangement 30 of Fig. 2b.

According to an example embodiment, the projection device cabinet 1 comprises a projection device support arrangement 30, which comprises a support plate 31. The projection device support arrangement 30 may further comprise attachment means 32 comprising a protecting plate 40. The protecting plate 40 may be attached to a first or the second edge 38, 39 of the support plate 31.

According to an example of Fig. 2a and 2c, the protecting plate 40 is attached to a second edge 39 of the support plate 31. The support plate 31 may be attached slidably to the protecting plate 40. The protecting plate 40 may comprise at least one sliding groove 47 and at least one screw 43. The at least one screw 43 may be attached to the first or the second edge 38, 39 of the support plate 31. The at least one screw 43 may be attached releasably or openable to the first or the second edge 38, 39 of the support plate 31. When the at least one screw 43 is attached slidably to the at least one sliding groove 47 it may allow the first or the second edge 38, 39 of the support plate to move upwards and/or downwards.

The example of Fig. 2b and 2d shows how the projection device support plate 31 of Fig. 2a is rotated around a first rotation axel X to an adjustable first inclination angle α₁. The support plate 31 may be located between the first and the second cabinet side wall 54, 55 and the first edge may be pointed to the cabinet front wall 56. The first rotation axel X may go through a turning point P. The support plate 31 may be supported with an adjustment system 33 from at least one support point S. When adjusting the first inclination angle α₁ of the support plate 31 the screws 43 may be first loosened to allow the screws 43 to slide in the sliding grooves 47. When the right first inclination angle α₁ is reached the support plate 31 may be in right place and the screws 43 may be tightened. This may allow height adjustment of an image. In the examples of Figs. 2a to 2d the turning point P is located at the first edge 38 of the support plate 31.

An example of Fig. 3 shows how the projection device support plate 31 is rotated from a first position around a first rotation axel X to a second position to an adjustable first inclination angle α₁. An example of Fig. 3 has otherwise similar arrangement to Figs. 2a to 2d except that a turning point P is located in the middle of the support plate 31. The at least one turning point P may be located at the same place as the at least one support point S.

The projection device support arrangement 30 may further comprise an adjustment system 33 and at least one support point S. The at least one rotation axel X, Y, Z may go through the at least one turning point P of the support plate 31. The at least one rotation axel X, Y, Z may also go through the at least one support point S of the support plate 31. The at least one rotation axel X, Y, Z may go through the at least one turning point and the at least one support point S of the support plate 31. The at least one support point S may be a point where the adjustment system 33 may be attached. The at least one support point S may be a point where one part of the adjustment system 33 may be attached and other part of the adjustment system 33 may be attached to the projection device cabinet 1. The adjustment system 33 may comprise a mechanical and/or an automatic adjustment system. Automatic adjustment may be done by a motor. The automatic adjustment system may comprise an eccentric or a lever. Mechanical adjustment system may comprise a spring, a locking or non-locking gas spring, a clamping screw, a handwheel, and/or a lever.

According to an example embodiment, the projection device support arrangement 30 is configured to be rotated around at least one turning point P, which is configured to provide at least single-degree-of-freedom (SDOF) movement for rotating the support plate 31 around the at least one rotation axel X, Y, Z of the support plate 31. The projection device support arrangement 30 may adjust the at least one adjustable inclination angle α₁, α₂, α₃ of the support plate 31 using the at least one turning point P. The single-degree-of-freedom movement may refer to a system that may rotate the support plate 31 around the first rotation axel X. This may allow height adjustment of an image. A two-degree-of-freedom (2DOF) may rotate the support plate 31 around the first rotation axel X and the second rotation axel Y. It may allow height adjustment of the image and rotation to portrait position. The projection device support plate may be rotated from landscape to portrait with axis of two-degrees-of-freedom. A three-degree-of-freedom (3DOF) system may rotate the support plate 31 around the first rotation axel X, the second rotation axel Y, and the third rotation axel Z. It may allow height adjustment, rotation to portrait position, and horizontal rotation of the image. The at least single-degree-of-freedom (SDOF) means that the movement may be at least one of the following: the single-degree-of-freedom (SDOF), the two-degree-of-freedom (2DOF), or the three-degree-of-freedom (3DOF).

According to an example embodiment, the one or more adjustable inclination angles α₁, α₂, α₃ comprise at least one of the following: an adjustable first inclination angle α₁, an adjustable second inclination angle α₂, and/or an adjustable third inclination angle α₃. At least one rotation axel X, Y, Z may comprise at least one of the following: a first rotation axel X located between the first cabinet side wall 54 and the second cabinet sidewall 55, a second rotation axel Y located between the cabinet front wall 56 and the cabinet back wall 57, and/or a third rotation axel Z located between the top wall 3, 9 and the base 50. The support plate 31 may be configured to be arranged at least one of the following: at the adjustable first inclination angle α₁ by rotating the support plate 31 around the first rotation axel X of the support plate 31, at the adjustable second inclination angle α₂ by rotating the support plate 31 around the second rotation axel Y of the support plate 31, and/or at the adjustable third inclination angle α₃ by rotating the support plate 31 around the third rotation axel Z of the support plate 31.

According to an example embodiment, the at least one turning point P is located at a first edge 38, at a second edge 39, between the first edge 38 and the second edge 39, or in the middle of the support plate 31 , or offset perpendicular from support plate 31. A projecting structure 201 of the at least one projection device 200 may face towards the first edge 38 of the support plate 31.

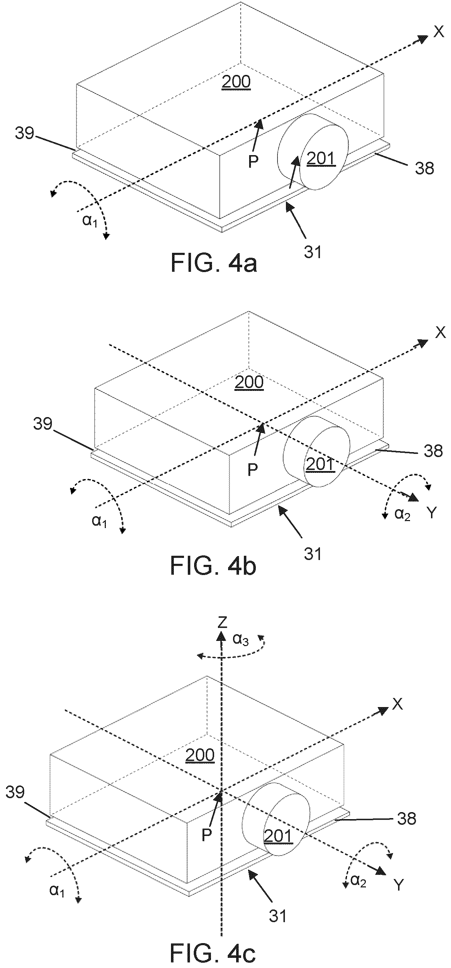

An example of Fig. 4a shows how a support plate 31 may be rotated around a first rotation axel X and adjusted to an adjustable first inclination angle α₁. The projection device 200 may be located on a support plate 31 so that a projecting structure 201 of the projection device 200 may point towards the first edge 38 of the support plate 31. The support plate 31 may be located between the first and the second cabinet side wall 54, 55 and the first edge may point towards the cabinet front wall 56. In Fig. 4a example the turning point P is located in the middle of the support plate 31 providing a single-degree-of-freedom (SDOF) movement. This may allow height adjustment of an image.

An example of Fig. 4b shows how the support plate 31 may be rotated around the first rotation axel X and/or a second rotation axel Y and adjusted to the adjustable first inclination angle α₁ and/or and an adjustable second inclination angle α₂. In Fig. 2b example the turning point P is located in the middle of the support plate 31 providing a two-degree-of-freedom (2DOF) movement. It may allow height adjustment of the image and rotation to portrait position.

An example of Fig. 4c shows how a support plate is rotated around the first rotation axel X, the second rotation axel Y, and/or a third rotation axel Z and adjusted to the adjustable first inclination angle α₁, the adjustable second inclination angle α₂, and/or an adjustable third inclination angle α₃. In Fig. 2c example the turning point P is located in the middle of the support plate 31 providing a three-degree-of-freedom (3DOF) movement. It may allow height adjustment, rotation to portrait position, and horizontal rotation of the image.

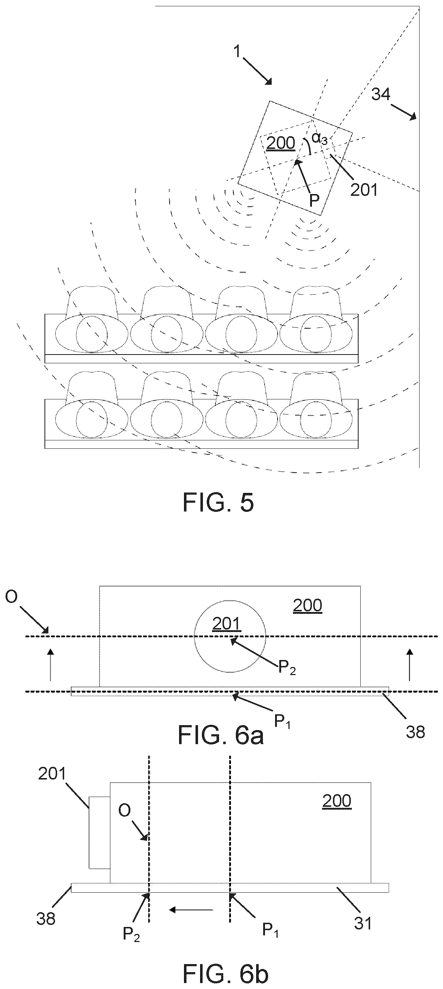

An example of Fig. 5 shows how a support plate 31 is rotated around a third rotation axel Z and adjusted to an adjustable third inclination angle α₃. The third rotation axel Z may be located between the base 50 and the top wall 3, 9. In Fig. 5 example the turning point P is located in the middle of the support plate 31 providing at least one-degree-of-freedom movement. It may allow horizontal rotation of the image 34. The example of Fig. 5 shows that the projection device 200 is now pointing close to a corner of the projection device cabinet 1 so that the audience sees the image 34 on a side wall of a space instead of a front wall.

Figs. 6a and 6b show how a turning point may be moved offset. An example of Fig. 6a shows how a turning point P₂ is located offset O perpendicular upward from a support plate 31. A turning point P₁ located on a first edge 38 of the support plate 31 may be moved to be located offset O perpendicular from the turning point P₁. Thus the offset turning point P₂ may be located vertically in the middle of the projection device 200 in the front of the projection device 200.

An example of Fig. 6b shows how a turning point P₂ is located offset O perpendicular towards the first edge 38 of the support plate 31. A turning point P₁ located in the middle of the support plate 31 may be moved to be located offset O from the turning point P₁. Thus the offset turning point P₂ may be located horizontally closer to the firs edge 38 of the projection device 200.

According to an example embodiment, the projection device cabinet 1 further comprises an adjustment system 33 for adjusting inclination of the support plate 31 and at least one sensor for recognizing the at least one adjustable inclination angle α₁, α₂, α₃ of the support plate 31. The at least sensor may be at least one position sensor. The projection device cabinet 1 may also comprise at least one position indicator configured to indicate the at least one adjustable inclination angle α₁, α₂, α₃ for manual adjustment of settings of the projection device 200 and/or the projection device cabinet 1, at least one distance sensor configured to measure distance between the at least one distance sensor and a projected image 34, at least one camera, at least one light sensor, and/or at least one temperature sensor.

According to an example embodiment, at least one of the following: the projection device support arrangement 30, the support plate 31, the adjustment system 33, and/or the projection device cabinet 1 comprises the at least one sensor for recognizing the at least one adjustable inclination angle α₁, α₂, α₃ of the support plate 31.

According to an example embodiment, the at least one adjustable inclination angle α₁, α₂, α₃ of the projection device support plate 31 is configured to be adjusted mechanically or automatically.

According to an example embodiment, the projection device cabinet 1 further comprises an electronic module and at least one connection panel 59, 62.

According to an example embodiment, settings of the at least one projection device 200 and/or the projection device cabinet 1 is configured to be adjusted automatically by using data from the at least one of the following: the camera, the sensor, the distance sensor, the light sensor, and/or the temperature sensor. The electronic module may be used to adjust the settings of the at least one projection device 200 and/or the projection device cabinet 1.

According to an example embodiment, the projection device support arrangement 30 further comprises a motor for automatic adjustment. The adjustment system 33 may comprise the motor.

According to an example embodiment, the adjustment by the motor is configured to be made with motorized linear motion or by motorized rotation-based motion. For example eccentric or lever may be used.

According to an example embodiment, mechanical adjustment, weight compensation, and/or locking is configured to be made by at least one of the following: a spring, a locking or non-locking gas spring, a clamping screw, a handwheel, and/or a lever 46.

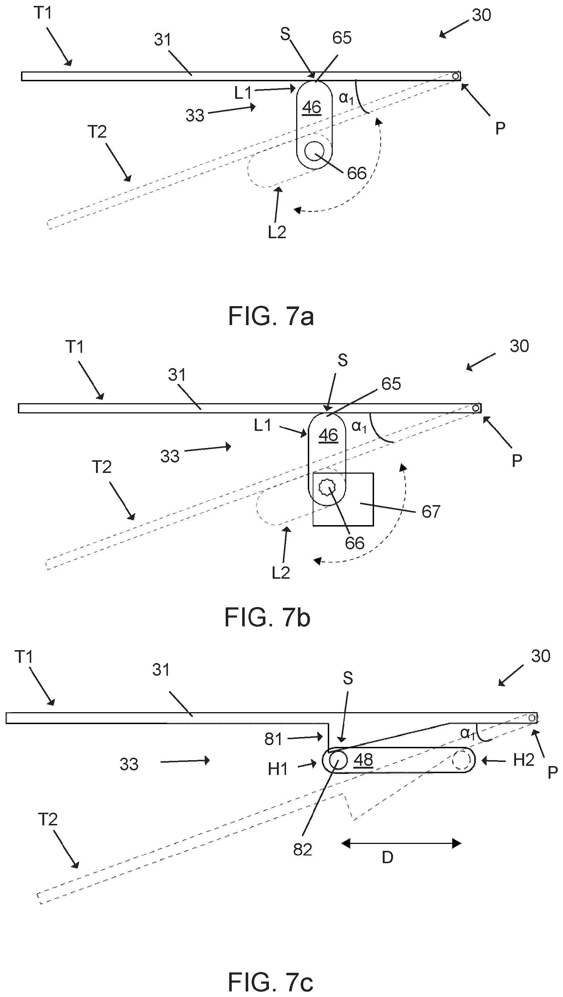

An examples of Figs. 7a to 7e show a side view of adjustment systems 33. The projection device support arrangement 30 may be rotated around at least one turning point P. The projection device support arrangement 30 may be supported from at least one support point S. The adjustment system 33 may be connected to the at least one support point S located to the support plate 31. The adjustment system 33 may be configured to be rotated the support plate 31 around at least one rotation axel X, Y, Z to form at least one inclination angle α₁, α₂, α₃. The at least one rotation axel X, Y, Z may go through the at least one turning point P of the support plate 31. The at least one rotation axel X, Y, Z may be located at a distance from the at least one support point S of the support plate 31. The at least one support point S may be a point where the adjustment system 33 may be attached. The adjustment system 33 may comprise a spring, a locking or non-locking gas spring, a clamping screw, a handwheel, and/or a lever 46.

According to an example embodiment, the adjustment system 33 allows the support plate 31 to turn from a first position T1 to a second position T2 and to the at least one first inclination angle α₁, α₂, α₃.

According to an example embodiment, the adjustment system 33 allows the support plate 31 to lower or rise from the first position T1 to the second position T2.

According to an example embodiment, the adjustment system 33 allows the support plate 31 to move between the first position T1 and the second position T2 back and forth.

The example of Fig. 7a shows a support arrangement 30 comprising an adjustment system 33. The adjustment system 33 may comprise a lever 46. An upper part 65 of the lever 46 may be connected to the at least one support point S or to the support plate 31. The upper part 65 of the lever 46 may be connected under a lower surface of the support plate. A lower part of the lever 46 may be connected to an axel point 66. The axel point 66 may be connected to the projection device cabinet 1. The lever 46 may be configured to rotate around the axel point 66 to allow the lever 46 to turn from a lever first position L1 to a lever second position L2. The lever 46 may move between the lever first position L1 and the lever second position L2 back and forth. This may allow the support plate 31 to turn from first position T1 to a second position T2 and to the first inclination angle α₁.

The example of Fig. 7b shows a similar adjustment system 33 as in Fig. 7a but it comprises also a motor 67 that operates the lever 46.

The example of Fig. 7c shows a support arrangement 30 comprising an adjustment system 33. The adjustment system 33 may comprise a locking member 82. The locking member 82 may be slidably attached to a lower surface of the support plate 31 or may slide along the lower surface of the support plate 31. The support plate 31 may have a protrusion 81 wherein the locking member 82 may be slidably attached. The protrusion 81 of the support plate 31 may have a triangular form. The locking member 82 may be slidably attached to at least one support point S of the support plate or to the support plate 31. The locking member 82 may be connected to a sliding hole 48. The sliding hole 48 may be part of the projection device cabinet 1 or may be located in the projection device cabinet 1. The locking member 82 may be slidably connected to a sliding hole 48. The locking member 82 may be configured to slide inside the sliding hole 48 to allow the locking member 82 to move from a locking member first position H1 to a locking member second position H2. The locking member 82 may move between the locking member first position H1 and the locking member second position H2 back and forth. The locking member 82 may move between the locking member first position H1 and the locking member second position H2. In the locking member first position H1 the locking member 82 may be slidably attached to the lower part of the protrusion 81 or may slide along the lower surface of the support plate 31 starting from the lower part of the protrusion 81. This may allow the support plate 31 to turn from first position T1 to a second position T2 and to the first inclination angle α₁.

The example of Fig. 7d shows a support arrangement 30 comprising an adjustment system 33. The adjustment system 33 may comprise a threaded support rod 74. The support plate 31 may have a threaded hole 78 where the support rod 74 may be threaded through. The adjustment system 33 may further comprise a adjustment support plate 79. The adjustment support plate 79 may be the top wall 9 of the projection device cabinet 1 or an additional plate inside the projection device cabinet 1. The at least one projection device 200 may be mounted on the support plate 31. The adjustment support plate 79 may have a hole 83 inside which the support rod 74 may be installed. The support rod 74 may rotate inside the hole 83. The adjustment system 33 may allow rotation of the support rod 74 in the rotation hole 83. The support rod 74 may further comprise a rotating handle 80. The rotating handle 80 may be attached at an upper part of the support rod 74. The rotating handle 80 may allow rotation of the support rod 74 according to arrows A. The support rod 74 may go through to the threaded hole 78, where in the threaded hole 78 may be rotatable and/or pivotable. The support rod 74 may go through at least one support point S of the support plate 31, the threaded hole 78, and/or the support plate 31. The support rod 74 may be configured to rotate inside the threaded hole 78 and hole 83 to allow the support plate 31 to lower or rise from a first position R1 to a second position R2. The support plate 31 may move between the first position R1 and the second position R2 back and forth. The support plate 31 may lower a distance D. This may allow the support plate 31 to turn from first position T1 to a second position T2 and to the first inclination angle α₁.

The example of Fig. 7e shows a support arrangement 30 comprising an adjustment system 33. The adjustment system 33 may comprise a linear actuator 49. The linear actuator may be a gas spring or a linear motor. The gas spring may be a locking or non-locking gas spring. An upper linear actuator part 68 of the linear actuator 49 may be connected to the at least one support point S. A lower linear actuator part 69 of the linear actuator 49 may be connected to the projection device cabinet 1. The lower linear actuator part 69 of the linear actuator 49 may be rotatably connected to the projection device cabinet 1. The upper linear actuator part 68 may be attached to the lower surface of the support plate 31. The upper linear actuator part 68 may be rotatably attached to the lower surface of the support plate 31. The linear actuator 49 may comprise a cylinder 52 and a piston rod 53. The piston rod 53 of the linear actuator 49 may be configured to slide inside the cylinder 52 to allow the linear actuator to turn from a linear actuator first position G1 to a linear actuator second position G2. The linear actuator may move between the linear actuator first position G1 and the linear actuator second position G2 back and forth. This may shorten or lengthen the length of the piston rod 53 by a distance D and may allow the support plate 31 to turn from first position T1 to a second position T2 and to the first inclination angle α₁.

According to an example embodiment, the support plate 31 comprises at least one of the following: at least one screw hole 37 for locking, at least one mounting hole 35 for aligning at least one projection device 200 into a place, at least one ventilation hole 36 for projection device 200 air ventilation, and/or at least one ventilation air flow device. The at least one ventilation air flow device may be a fan 20.

According to an example embodiment, the projection device cabinet 1 is a movable projection device cabinet.

An example of Fig. 8a shows a support plate 31 seen below. The support plate 31 may comprise at least one screw hole 37 and at least one mounting hole 35 for one or more projection device legs 73.

An example of Fig. 8b shows a support plate 31 comprising screw holes 37 and mounting holes 35. It may comprise mounting holes 35 for at least two projection devices 200.

An example of Fig. 8c shows a support plate 31 comprising a ventilation hole 36.

An example of Fig. 8d shows a support plate 31 comprising a ventilation hole 36 and a fan 20 located in the ventilation hole 36.

An example of Fig. 9a shows a projection device 200 and a support plate 31. The support plate 31 may may comprise at least one screw hole 37 for one or more screws 43 and at least one mounting hole 35 for one or more projection device legs 73.

An example of Fig. 9b shows how the projection device 200 of Fig. 9a is attached to the support plate 31. The projection device legs 73 may be mounted to the mounting holes 35 and the screws 43 may be mounted to the screw holes 37 to attach the projection device 200 to the support plate 31.

An example of Fig. 10 shows a projection device support arrangement 30. The projection device 200 may be located on the support plate 31. The projection device support arrangement 30 may comprise at least one connection panel 59, 62 and/or an electronic module. The at least one connection panel 59, 62 and/or the electronic module 76 may be attached to the support plate 30. The at least one connection panel 59, 62 may be attached to the second edge 39 and in front of the support plate 31. The at least one connection panel 59, 62 may be attached to the first edge 39 of the support plate 31. The at least one connection panel may be a first connection panel 59 or a second connection panel 62.

Fig. 11 illustrates an example of a method for adjusting inclination of a support plate 31 of a projection device cabinet 1, which comprises a base 50, a first cabinet side wall 54 extending from the base 50, a second cabinet sidewall 55 extending from the base 50 and at a distance from the first cabinet side wall 54, a cabinet front wall 56 and cabinet back wall 57 defining together a cabinet space. The projection device cabinet 1 may comprise a projection device support arrangement 30 comprising a support plate 31 configured to receive at least one projection device 200. A projection device space 8 may be arranged in the cabinet space between the base 50 and a top wall 3,9 and between the first side wall 4,54 and the second side wall 5,55. The support plate 31 may define a floor or a wall of the projection device space 8.

At operation 100, the method may comprise that inclination of a support plate 31 may be adjusted to one or more adjustable inclination angles α₁, α₂, α₃ inside the cabinet space.

Further features of the method directly result from functionalities of, for example, the projection device cabinet 1. Different variations of the method may be also applied, as described in connection with the various embodiments.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first, 'second', or 'third' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A projection device cabinet (1), comprising a base (50), a first cabinet side wall (54) extending from the base (50), a second cabinet sidewall (55) extending from the base (50) and at a distance from the first cabinet side wall (54), a cabinet front wall (56), and cabinet back wall (57) defining together a cabinet space, wherein
the projection device cabinet (1) comprises a projection device support arrangement (30) comprising a support plate (31) configured to receive at least one projection device (200);
a projection device space (8) is arranged in the cabinet space between the base (50) and a top wall (3,9) and between the first side wall (4,54) and the second side wall (5,55); and
the support plate (31) defining a floor or a wall of the projection device space (8) is arranged at one or more adjustable inclination angles (α₁,α₂,α₃) inside the cabinet space.

2. The projection device cabinet (1) according to claim 1, wherein the projection device support arrangement (30) is configured to be rotated around at least one turning point (P), which is configured to provide at least single-degree-of-freedom (SDOF) movement for rotating the support plate (31) around the at least one rotation axel (X,Y,Z) of the support plate (31).

3. The projection device cabinet (1) according to claim 2, wherein
the one or more adjustable inclination angles (α₁, α₂, α₃) comprise at least one of the following: an adjustable first inclination angle (α₁), an adjustable second inclination angle (α₂), and/or an adjustable third inclination angle (α₃);
at least one rotation axel (X,Y,Z) comprises at least one of the following: a first rotation axel (X) located between the first cabinet side wall (54) and the second cabinet sidewall (55), a second rotation axel (Y) located between the cabinet front wall (56) and the cabinet back wall (57), and/or a third rotation axel (Z) located between the top wall (3,9) and the base (50); and
the support plate (31) is configured to be arranged at least one of the following:
at the adjustable first inclination angle (α₁) by rotating the support plate (31) around the first rotation axel (X) of the support plate (31);
at the adjustable second inclination angle (α₂) by rotating the support plate (31) around the second rotation axel (Y) of the support plate(31); and/or
at the adjustable third inclination angle (α₃) by rotating the support plate (31) around the third rotation axel (Z) of the support plate (31).

4. The projection device cabinet (1) according to claim 2 or claim 3, wherein the at least one turning point(P) is located
at a first edge (38), at a second edge (39), between the first edge (38) and the second edge (39), or in the middle of the support plate (31); or
offset perpendicular from support plate (31), wherein a projecting structure (201) of the at least one projection device (200) is facing towards the first edge (38) of the support plate (31).

5. The projection device cabinet (1) according to any one of the preceding claims, wherein the projection device cabinet (1) further comprises
an adjustment system (33) for adjusting inclination of the support plate (31);
at least one sensor for recognizing the at least one adjustable inclination angle (α₁,α₂,α₃) of the support plate (31);
at least one position indicator configured to indicate the at least one adjustable inclination angle (α₁,α₂,α₃) for manual adjustment of settings of the projection device (200);
at least one distance sensor configured to measure distance between the at least one distance sensor and a projected image (34);
at least one camera;
at least one light sensor; and/or
at least one temperature sensor.

6. The projection device cabinet (1) according to claim 5, wherein at least one of the following: the projection device support arrangement (30), the support plate (31), the adjustment system (33), and/or the projection device cabinet (1) comprises the at least one sensor for recognizing the at least one adjustable inclination angle (α₁,α₂,α₃) of the support plate (31).

7. The projection device cabinet (1) according to any one of the preceding claims, wherein the at least one adjustable inclination angle (α₁,α₂,α₃) of the projection device support plate (31) is configured to be adjusted mechanically or automatically.

8. The projection device cabinet (1) according to any one of claims 5 to 7 , wherein settings of the at least one projection device (200) and/or projection device cabinet (1) is configured to be adjusted automatically by using data from the at least one of the following: the camera, the sensor, the distance sensor, the light sensor, and/or the temperature sensor.

9. The projection device cabinet (1) according to claim 7 or claim 8, wherein the projection device support arrangement (30) further comprises a motor for automatic adjustment.

10. The projection device cabinet (1) according to claim 9, wherein the adjustment by the motor is configured to be made with motorized linear motion or by motorized rotation-based motion.

11. The projection device cabinet (1) according to claim 7, wherein mechanical adjustment, weight compensation, and/or locking is configured to be made by at least one of the following: a spring, a locking or non-locking gas spring, a clamping screw, a handwheel, and/or a lever (46).

12. The projection device cabinet (1) according to any one of the preceding claims, wherein the projection device cabinet (1) further comprises an electronic module (76) and at least one connection panel (59, 62).

13. The projection device cabinet (1) according to any one of the preceding claims, wherein the support plate (31) comprises at least one of the following:
at least one screw hole (37) for locking;
at least one mounting hole (35) for aligning at least one projection device (200) into a place;
at least one ventilation hole (36) for projection device (200) air ventilation; and/or
at least one ventilation air flow device.

14. The projection device cabinet (1) according to any one of the preceding claims, wherein the projection device cabinet (1) is a movable projection device cabinet.

15. A method for adjusting inclination of a support plate (31) of a projection device cabinet (1), which comprises a base (50), a first cabinet side wall (54) extending from the base (50), a second cabinet sidewall (55) extending from the base (50) and at a distance from the first cabinet side wall (54), a cabinet front wall (56), and cabinet back wall (57) defining together a cabinet space, wherein
the projection device cabinet (1) comprises a projection device support arrangement (30) comprising a support plate (31) configured to receive at least one projection device (200); and
a projection device space (8) is arranged in the cabinet space between the base (50) and a top wall (3,9) and between the first side wall (4,54) and the second side wall (5,55); and
the support plate (31) defines a floor or a wall of the projection device space (8), wherein in the method
inclination of a support plate (31) is adjusted to one or more adjustable inclination angles (α₁,α₂,α₃) inside the cabinet space.
